# EUROPÄISCHE PATENTANMELDUNG

(11) **EP 0 913 247 A1**
(43) Veröffentlichungstag der Anmeldung: **06.05.1999**
(21) Anmeldenummer: 98120213.8
(22) Anmeldetag: 26.10.1998
(51) Int. Cl.: B29C 65/14

(54) **Verfahren zum Schmelzverbinden von Elastomeren**

(30) Priorität: 31.10.1997 DE 19748209
(71) Anmelder: Schürhoff, Thomas, 63477 Maintal (DE)
(72) Erfinder: Schürhoff, Thomas, 63477 Maintal (DE)
(74) Vertreter: Haar, Lucas H., Dipl.-Ing.

(57) **Zusammenfassung**

Bei einem Verfahren zum Schmelzverbinden von Teilen (4, 5) aus thermoplastischen Elastomeren oder thermoplastischem Kautschuk über ausgedehnte Grenzflächen (6, 7) der Teile (4, 5), bei dem die Grenzflächen (6, 7) unabhängig voneinander mittels einer externen Heizquelle auf Schmelzverbindungstemperatur erwärmt werden, die Teile (4, 5) mit den erwärmten Grenzflächen (6, 7) unter Ausübung von Druck zusammengefügt und so lange gegeneinander gehalten werden, bis eine feste Schmelzverbindung entstanden ist, ist vorgesehen, daß die Erwärmung der Grenzflächen (6, 7) berührungslos mittels eines dunklen Infrarotstrahlers (11) erfolgt, wobei die Temperatur der Strahlerflächen (12) auf einem, ungeachtet regelungsbedingter Abweichungen, konstanten Wert von mindestens 630°C gehalten wird. Die Dauer der Erwärmung wird hierbei auf eine auf die jeweiligen Teile bezogene Zeitspanne begrenzt, wobei die Oberflächentemperatur des Strahlers (11) so eingestellt wird, daß die Dauer der Erwärmung der Grenzflächen (6, 7) auf Schmelzverbindungstemperatur weniger als 15 Sekunden, insbesondere weniger als 10 Sekunden beträgt.

## Beschreibung

Die Erfindung betrifft ein Verfahren zum Schmelzverbinden von Teilen aus thermoplastischen Elastomeren oder thermoplastischem Kautschuk über ausgedehnte Grenzflächen der Teile, bei dem die Grenzflächen unabhängig voneinander mittels einer externen Heizquelle auf Schmelzverbindungstemperatur erwärmt werden, die Teile mit den erwärmten Grenzflächen unter Ausübung von Druck zusammengefügt und so lange gegeneinander gehalten werden, bis eine feste Schmelzverbindung entstanden ist.

Das Schmelzverbinden thermoplastischer Elastomere bereitet besondere Schwierigkeiten, weil das Material sich aufgrund seiner elastischen Eigenschaften beim Zusammendrücken der miteinander zu verbindenden Grenzflächen in den angrenzenden Zonen elastisch verformt, und es dadurch leicht zur Deformierung und Maßabweichungen der Teile nach dem Schmelzverbinden kommen kann.

Bei einem aus der DE 30 25 255 C2 bekannten Verfahren der angegebenen Art erfolgt die Erwärmung der Grenzflächen der Teile in einer Ausführungsart mittels einer Heizplatte, die in den Raum zwischen den beiden Grenzflächen geschwenkt wird und an die die Teile mit ihren Grenzflächen angedrückt werden. Die Temperatur der Heizplatte wird hierbei auf 290°C eingestellt. Nach einer Druckberührungszeit auf der Heizplatte von 20 bis 24 Sekunden wird die Heizplatte entfernt und die derart erweichten Kunststoffteile werden in Kontakt miteinander gebracht und unter Ausübung von Druck und einer relativen raschen, einfachen Drehbewegung einer Scherbeanspruchung unterworfen, so daß die Viskosität im Grenzflächenbereich reduziert wird. Bei einer anderen Ausführungsform des bekannten Verfahrens erfolgt die Erwärmung der Grenzflächen mit einem Hochfrequenzenergiefeld, das mit einer externen Hochfrequenzinduktionsspulenanordnung angelegt wird. Hierbei wird der Grenzflächenbereich von mindestens einem der Kunststoffteile mit einem Schmelzbindemittel versehen, welches wärmeerzeugende Partikel enthält. Die Erwärmung erfolgt nach dem Zusammenfügen der Kunststoffteile durch das Hochfrequenzenergiefeld für eine Zeitspanne von 3 bis 5 Sekunden, wobei wiederum durch eine relative Drehbewegung der Kunststoffteile der Grenzflächenbereich einer Scherbeanspruchung unterworfen wird. Das bekannte Verfahren ist wegen der erforderlichen Drehbewegung nur zur Schmelzverbindung von Rotationsflächen geeignet.

Aus der DE 85 04 188 U1 ist ein Verfahren zum Verschweißen von vier an den Enden auf Gehrung geschnittenen Kunststoffprofilen gleichen Querschnitts zu einem in sich geschlossenen rechteckförmigen Dichtungskörper bekannt. Derartige Dichtungskörper werden für Türen, Fenster, Kühlschränke, Kühltruhen und dergleichen verwendet. Hierbei werden die vier Kunststoffteile nach einem festgelegten Schema in Nuten von Spannbacken eingelegt, die sich beiderseits einer Schweißebene befinden. Die Nuten in den Spannbacken sind in einem Winkel von 45°C zur Schweißebene angeordnet und mit einem den Querschnittsabmessungen der Profile entsprechenden Einsatzteil versehen. Zwischen die Backen ist eine Anschlagplatte einsetzbar, an die die Enden der Profile vor dem Festspannen zwischen den Backen angelegt werden. Anstelle der Anschlagplatte wird dann ein Schweißspiegel zwischen die Backen gefahren, der die Enden der Profile auf die zum Verschweißen erforderliche Erweichungstemperatur erhitzt. Anschließend wird der Schweißspiegel wieder aus dem Zwischenraum zwischen den Backen herausgefahren und die Backen werden zum Verschweißen der angeschmolzenen Profilenden gegeneinander gefahren. Die Anschlagplatte kann bei diesem bekannten Verfahren die gleiche Dicke wie der Schweißspiegel haben, sie kann aber auch dicker als der Schweißspiegel sein, so daß der Schweißspiegel die Profilenden nicht berührt und diese nur durch Strahlungswärme aufheizt. Temperaturen und Werkstoffe sind hierbei nicht angegeben.

Aus der DE 37 17 608 A1 ist ein Verfahren zum homogenen Verbinden von aus stark verunreinigten Kunststoff-Recycling-Materialien vorgefertigten Schalen, Platten oder anders geformten Teilen bekannt, bei dem zu verschweißenden Grenzflächen durch eine Strahlungseinheit für kurzwellige Infrarotstrahlen plastifiziert werden. Anschließend werden die plastifizierten Grenzflächen durch schwingungserzeugende Elemente, die eine genau definierte Richtung und Frequenz haben, zusammengefügt und gegeneinandergepreßt.

Bei einem in der EP 0 546 854 A1 beschriebenen Verfahren zum Verschweißen von Rohrenden aus Polyarilensulfid wird zum berührungslosen Erwärmen der Rohrenden ein keramisches Heizelement verwendet, das eine Oberflächentemperatur von 450°C hat und in einem Abstand von 1 mm von den Endflächen der Rohrenden angeordnet wird. Hierbei werden die Endflächen innerhalb von 35 Sekunden auf eine maximale Temperatur von 284°C erwärmt.

In der US 5,286,327 A ist ein Verfahren zum Verschweißen von thermoplastischen Kunststoffen beschrieben, in die zur Verstärkung Fasern aus Glas, Kohlenstoff oder Aramid eingebettet sind. Hierbei werden ausgewählte Verschweißungszonen mit Hilfe eines Infrarotstrahlers erwärmt, dessen Strahlungsenergie auf einen kleinen Punkt auf der Oberfläche des Materials fokussiert wird. Die Temperatur der fokussierten Infrarotstrahlen kann hierbei 650 °C erreichen. Strahler und Material werden hierbei oszillierend relativ zueinander bewegt werden, so daß örtlich kurze Erwärmungs- und Abkühlungsphasen aufeinander folgen, bis die geeignete Schmelztemperatur an der Oberfläche erreicht ist. Zur Ermittlung der für die Verschweißung geeigneten Schmelztemperatur sind an dem Infrarotstrahler Infrarotsensoren angebracht, die kontinuierlich die ansteigenden Temperaturen der einander zugeordneten Verschweißungszonen erfassen und deren Signale von einer Einrichtung zur Regelung der Strahlerleistung verarbeitet werden, um eine Temperaturangleichung beider Zonen zu erreichen.

In der EP 0 167 870 A1 ist ein Verfahren zum Stumpfschweißen von Rohren, Kanälen oder Verbindungsstücken aus Fluorpolymeren angegeben, die extrem chemisch inert und für kontinuierliche Betriebstemperaturen in einem Bereich von 149 bis 260°C und darüber geeignet sind. Bei diesem Verfahren wird zwischen den einander gegenüber liegenden Endflächen der zu verbindenden Teile ein flacher Infarotstrahler angeordnet, dessen Oberflächentemperatur in dem Bereich von 677 bis 1093°C, vorzugsweise in dem Bereich von 871 bis 927°C liegt, wobei der Abstand der Endflächen der Teile von dem Strahler 1/4 bis 3/4 Zoll beträgt. Die Erwärmung wird fortgesetzt bis die Endabschnitte der Teile geschmolzen sind. Dies wird durch Beoachtung festgestellt, da der normalerweise milchige und undurchsichtige Charakter der Fluorpolymere zu einem im wesentlichen klaren Aussehen wechselt, wenn das Material geschmolzen ist. Nach Erreichen des gewünschten Schmelzzustands wird der Strahler entfernt und die Teile werden zum Verschweißen mit ihren Endflächen gegeneinander gedrückt.

Der Erfindung liegt die Aufgabe zugrunde, ein Verfahren zum Schmelzverbinden von Teilen aus thermoplastischen Elastomeren oder thermoplastischem Kautschuk anzugeben, das einen geringen Zeitaufwand erfordert, für beliebige Formen von Grenzflächen geeignet ist und eine hohe Wiederholgenauigkeit gewährleistet.

Erfindungsgemäß wird diese Aufgabe bei einem Verfahren der eingangs genannten Art dadurch gelöst, daß die Erwärmung der Grenzflächen der Teile berührungslos mittels eines dunklen Infrarotstrahlers erfolgt, wobei der Infrarotstrahler für die Dauer der Erwärmung vor den Grenzflächen so angeordnet wird, daß sich seine Strahlungsfläche im gleichen Abstand von den Grenzflächen befindet und daß die Oberflächentemperatur des Infrarotstrahlers auf einem, ungeachtet regelungsbedingter Abweichungen, konstanten Wert von mindestens 630°C, insbesondere mindestens 800°C, oder höher gehalten wird und die Dauer der Erwärmung auf eine auf das jeweilige Werkstück bezogene Zeitspanne begrenzt wird.

Die Erfindung beruht auf der Erkenntnis, daß die berührungslose Erwärmung von Teilen aus thermoplastischen Elastomeren mit Hilfe eines Infrarotstrahlers mit einer Strahlertemperatur von 630°C und höher eine besonders schnelle Erwärmung des Grenzflächenbereichs auf die erforderliche Schmelzverbindungstemperatur und mit einer solchen gleichmäßigen Eindringtiefe ermöglicht, daß bei dem sich unmittelbar an die Erwärmung anschließenden Zusammenfügen der erwärmten Grenzflächen ohne zusätzliche Maßnahmen, wie der Einleitung von Scherbeanspruchungen, eine vollständige Schmelzverbindung erreicht wird, die sich durch geringe Deformierung der Teile und hohe Maßhaltigkeit auszeichnet und deren Festigkeit sich von der Festigkeit benachbarter Werkstoffzonen nicht unterscheidet. Die geeignete Schmelzverbindungstemperatur läßt sich durch die genaue Einhaltung der Strahlertemperatur und der Erwärmungsdauer in engen Grenzen und mit hoher Wiederholgenauigkeit im gesamten Bereich der Grenzflächen erzeugen, ohne daß es zu einer örtlichen Überhitzung und Schädigung des Werkstoffs kommt. Die gleichmäßige Erwärmung des Grenzflächenbereichs trägt weiterhin dazu bei, daß abgesehen von der Verschmelzungszone die Teile beim Zusammenfügen unter Druck ungeachtet differierender Wandquerschnitte nicht deformiert werden. Durch die mit dem erfindungsgemäßen Verfahren erreichbare exakte Dosierung der Grenzflächenerwärmung ist es möglich, bei der Erwärmung bis an die Grenze der thermischen Belastbarkeit des Werkstoffs zu gehen und eine niedrige, für die Verschmelzung besonders günstige Viskosität der Grenzflächenschicht zu erreichen.

Nach einem weiteren Vorschlag der Erfindung wird zur Erwärmung der Grenzflächen ein Infrarotstrahler verwendet, dessen Oberfläche aus einem keramischen Material besteht und dessen Strahlungsemission vorwiegend im Wellenlängenbereich von 2 bis 10 µm liegt.

Das erfindungsgemäße Verfahren wird anhand eines in der Zeichnung schematisch dargestellten Beispiels näher erläutert. Es zeigen
- Figur 1: die Aufnahme der zu verbindenden Teile in einer Spannvorrichtung,
- Figur 2: die Beheizung der Grenzflächenbereiche der zu verbindenden Teile,
- Figur 3: das Zusammenfügen der zu verbindenden Teile.

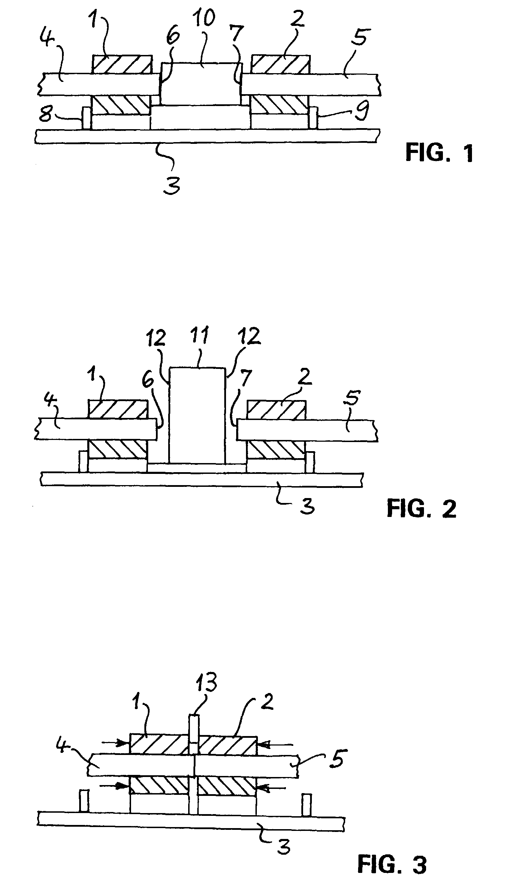

Figur 1 zeigt zwei Spannvorrichtungen 1, 2, die auf einer Führungsschiene 3 in Richtung der Zeichnungsebene verschiebbar sind. In jeder Spannvorrichtung 1, 2 ist das Ende eines Teils 4 bzw. 5 gehalten. Bei den Teilen 4, 5 handelt es sich um langgestreckte Profile aus thermoplastischem Elastomer, die mit ihren stirnseitigen Grenzflächen 6, 7 miteinander verschweißt werden sollen. Zum Einlegen der Teile 4, 5 können die geteilten Spannvorrichtungen 1, 2 aufgeklappt werden. Haben die Teile 4, 5 eine sehr unregelmäßige Querschnittsform, so erfolgt das Einlegen von Hand. Nach dem Schließen der Spannvorrichtungen 1, 2 sind die Teile 4, 5 fest eingespannt, wobei die Innenflächen der Spannvorrichtungen 1, 2 in ihrer Querschnittsform an die Querschnittsform der Teile 4, 5 angepaßt ist. Beim Einlegen der Teile 4, 5 werden die Spannvorrichtungen 1, 2 an Anschlägen 8, 9 positioniert und zwischen den Spannvorrichtungen 1, 2 wird ein Zentrieranschlag 10 angeordnet, an den die Grenzflächen 6, 7 angelegt werden. Auf diese Weise wird der Abstand zwischen den Grenzflächen 6, 7 und der Überstand, mit dem die Teile 4, 5 aus den Spannvorrichtungen 1, 2 hervorstehen, festgelegt.

Zum Erwärmen der Teile 4, 5 wird, wie in Figur 2 gezeigt, der Zentrieranschlag 10 entfernt und zwischen den Grenzflächen 6, 7 ein Infrarotstrahler 11 angeordnet, dessen Strahlungsflächen 12 sich im gleichen Abstand von den Grenzflächen 6, 7 befinden. Zur Vermeidung von Strahlungsverlusten wird der Abstand zwischen den Strahlungsflächen 12 und den Grenzflächen 6, 7 klein gehalten, er beträgt vorzugsweise 1 bis 3 mm. Die Strahlungsflächen 12 des Strahlers 11 werden bereits vor dem Einfahren zwischen die Grenzflächen 6, 7 auf die gewünschte Temperatur, zum Beispiel auf 850°C, aufgeheizt und durch eine geeignete Regelung der Heizleistung auf dieser Temperatur gehalten. Um bei der Erwärmung der Grenzflächen 6, 7 die werkstoffbedingte Schmelzverbindungstemperatur genau zu erreichen und nicht zu überschreiten, wird die Dauer der Bestrahlung der Grenzflächen 6, 7 auf eine bestimmte Zeitspanne begrenzt, die von der Querschnittsform der Teile 4, 5 und ihrem Material abhängig ist. Hierzu wird beim Einfahren des Strahlers 11 in den Zwischenraum zwischen den Grenzflächen 6, 7 ein Zeitgeber angesteuert, der nach Ablauf der voreingestellten Zeitspanne das automatische Zurückziehen des Strahlers 11 aus dem Zwischenraum zwischen den Grenzflächen 6, 7 auslöst.

Sobald der Strahler 11 den Zwischenraum zwischen den Spannvorrichtungen 1, 2 verlassen hat, werden durch einen geeigneten Antrieb die Spannvorrichtungen 1, 2 zueinander bewegt und dadurch die Teile 4, 5 mit ihren Grenzflächen 6, 7 zusammengefügt. Der hierbei von den Spannvorrichtungen 1, 2 zurückgelegte Weg ist um einen geringen Betrag größer als der zuvor zwischen den Grenzflächen 6, 7 vorhandene, durch den Anschlag 10 bestimmte Abstand. Sobald die Grenzflächen 6, 7 aufeinandergetroffen sind, wird durch die auf die Spannvorrichtungen 1, 2 einwirkende Druckkraft der Grenzflächenbereich plastisch verformt und eine innige Verschmelzung der erweichten Grenzflächenbereiche bewirkt. Wie in Figur 3 gezeigt, wird hierbei durch einen zwischen den Spannvorrichtungen 1, 2 angeordneten Anschlag 13 die plastische Verformung auf das erforderliche Maß begrenzt. Nachdem die Enden der Teile 4, 5 miteinander verbunden sind, können nach kurzer Abkühlzeit die Spannvorrichtungen 1, 2 geöffnet und die verbundenen Teile entnommen werden.

In der nachfolgenden Tabelle werden einige Beispiele für die Anwendung des erfindungsgemäßen Verfahrens wiedergegeben, die mit den angegebenen Daten jeweils ausgezeichnete Schmelzverbindungen ergaben:

| Probe | Material | Shorehärte | Strahlertemp. °C | Erwärmungszeit s | Abkühlzeit s |
|---|---|---|---|---|---|
| 1 | SEBS | 30 | 630 | 4,5 | 10 |
| 2 | SEBS | 60 | 850 | 5 | 4 |
| 3 | Santoprene | 64 | 850 | 7 | 15 |
| 4 | SBS | 50 | 900 | 4,5 | 5 |
| 5 | Santoprene | 64 | 900 | 13 | 15 |
| 6 | Santoprene | 45 | 630 | 7 | 8 |
| 7 | Santoprene | 45 | 900 | 5 | 4 |
| 8 | Santoprene | 45 | 650 | 15 | 15 |
| 9 | Santoprene | 45 | 800 | 8 | 5 |
| 10 | Santoprene | 45 | 900 | 8 | 5 |
| 11 | Geolast | 70 | 900 | 8 | 5 |
| 12 | SEBS | 31 | 900 | 2 | 2 |

Die in der Tabelle fortlaufend numerierten Proben unterscheiden sich durch die Größe und Form der Grenzflächen und wie angegeben durch das Material. Bei den angegebenen Materialbezeichnungen Santoprene und Geolast handelt es sich um Handelsbezeichnungen des Herstellers des Materials, der Firma Monsanto. SEBS und SBS sind übliche Abkürzungen für die Blockcopolymere Styrol/Ethylen/Butylen/Styrol bzw. Styrol/Butadien/Styrol. Alle genannten Materialien sind thermoplastische Elastomere.

Wie die Tabelle zeigt, lassen sich mit dem beschriebenen Verfahren außerordentlich kurze Erwärmungszeiten verwirklichen. Auch die Abkühlzeiten sind kurz, da nur ein geringes Materialvolumen erwärmt wird. Das Verfahren zeichnet sich daher auch durch hohe Wirtschaftlichkeit aus.

## Patentansprüche

1. Verfahren zum Schmelzverbinden von Teilen aus thermoplastischen Elastomeren oder thermoplastischem Kautschuk über ausgedehnte Grenzflächen der Teile, bei dem die Grenzflächen unabhängig voneinander mittels einer externen Heizquelle auf Schmelzverbindungstemperatur erwärmt werden, die Teile mit den erwärmten Grenzflächen unter Ausübung von Druck zusammengefügt und so lange gegeneinander gehalten werden, bis eine feste Schmelzverbindung entstanden ist, **dadurch gekennzeichnet,** daß die Erwärmung der Grenzflächen der Teile berührungslos mittels eines dunklen Infrarotstrahlers erfolgt, wobei der Infrarotstrahler für die Dauer der Erwärmung vor den Grenzflächen so angeordnet wird, daß sich seine Strahlungsfläche im gleichen Abstand von den Grenzflächen befindet und daß die Oberflächentemperatur des Infrarotstrahlers auf einem, ungeachtet regelungsbedingter Abweichungen, konstanten Wert von mindestens 630°C, insbesondere mindestens 800°C, oder höher gehalten wird und die Dauer der Erwärmung auf eine auf die jeweiligen Teile bezogene Zeitspanne begrenzt wird.

2. Verfahren nach Anspruch 1, dadurch gekennzeichnet, daß die Oberflächentemperatur des Strahlers auf einem konstanten Temperaturwert gehalten wird, der im Bereich von 630 bis 1000°C liegt.

3. Verfahren nach Anspruch 2, dadurch gekennzeichnet, daß die Oberflächentemperatur des Strahlers auf einem konstanten Temperaturwert gehalten wird, der im Bereich von 800 bis 950°C liegt.

4. Verfahren nach einem der vorhergehenden Ansprüche, dadurch gekennzeichnet, daß zur Erwärmung der Grenzflächen ein Infrarotstrahler verwendet wird, dessen Oberfläche aus einem keramischen Material besteht und dessen Strahlungsemission vorwiegend im Wellenlängenbereich von 2 bis 10 µm liegt.

5. Verfahren nach einem der vorhergehenden Ansprüche, dadurch gekennzeichnet, daß die Oberflächentemperatur des Strahlers so eingestellt wird, daß die Dauer der Erwärmung der Grenzflächen auf Schmelzverbindungstemperatur maximal 15 Sekunden, insbesondere maximal 10 Sekunden beträgt.

6. Verfahren nach einem der vorhergehenden Ansprüche, dadurch gekennzeichnet, daß die zu verbindenden Teile (4, 5) mit den einander zugekehrten Grenzflächen (6, 7) im Abstand voneinander in Spannvorrichtungen (1, 2) gehalten werden, daß ein Infrarotstrahler (12) mit zwei entgegengesetzten Strahlungsflächen in den Zwischenraum zwischen den Grenzflächen (6, 7) eingebracht wird, daß nach Ablauf der vorgegebenen Erwärmungsdauer der Strahler (12) aus dem Zwischenraum zwischen den Grenzflächen (6, 7) entfernt wird und anschließend die Spannvorrichtungen (1, 2) zueinander bewegt werden, wobei der von den Spannvorrichtungen (1, 2) zu überwindende Fügeweg geringfügig größer ist als der vorherige Abstand zwischen den Grenzflächen (6, 7) der Teile (4, 5).

7. Verfahren nach Anspruch 6, dadurch gekennzeichnet, daß die Spannvorrichtungen (1, 2) die Teile (4, 5) in geringem Abstand von den Grenzflächen (6, 7) umgreifen und daß die Halteflächen der Spannvorrichtungen (1, 2) an die Außenkontur der Teile (4, 5) angepaßt sind.
